# NEUE EUROPÄISCHE PATENTSCHRIFT

(11) **EP 0 396 728 B2**
(45) Veröffentlichungstag und Bekanntmachung des Hinweises auf die Entscheidung über den Einspruch: **16.10.1996**
(45) Hinweis auf die Patenterteilung: 18.08.1993
(21) Anmeldenummer: 89913218.7
(22) Anmeldetag: 08.11.1989
(51) Int. Cl.: B65D 1/38, B29C 45/17

(54) **FLASCHENKASTEN AUS KUNSTSTOFF**
PLASTIC BOTTLE-CASE
CASIER A BOUTEILLES EN MATIERE PLASTIQUE

(30) Priorität: 08.11.1988 DE 3837894; 18.11.1988 DE 3839087
(43) Veröffentlichungstag der Anmeldung: 14.11.1990
(73) Patentinhaber: SCHOELLER INTERNATIONAL ENGINEERING KG, CH-8130 Unterengstringen (CH)
(72) Erfinder: UMIKER, Hans, CH-8132 Egg (CH)
(74) Vertreter: Bockhorni, Josef, Dipl.-Ing.
(86) Internationale Anmeldenummer: EP8901335
(87) Internationale Veröffentlichungsnummer: WO9005676

(56) Entgegenhaltungen:
- EP-A- 0 258 549
- EP-A- 0 289 230
- DE-C- 3 823 650
- DE-U- 7 819 399
- FR-A- 2 223 248
- GB-A- 2 158 002
- US-A- 3 506 154

## Beschreibung

### Fassung geltend für die Staaten : AT, BE, CH, FR, GB, IT, LI, LU, NL, SE

Die Erfindung betrifft einen Flaschenkasten aus Kunststoff gemäß den Oberbegriffen der Patentansprüche 1 und 2 sowie Verfahren zur Herstellung solcher Flaschenkästen.

Flaschenkästen aus Kunststoff bestehen üblicherweise aus zwei schmalen und zwei langen Seitenwänden und einem offen strukturierten Kastenboden, wobei gegebenenfalls im Kasteninneren eine Facheinteilung, bestehend aus vorzugsweise über Kreuz angeordneten Fachwänden, angeordnet ist. Zum Tragen weisen derartige Flaschenkästen zumeist Handgriffe auf, die durch einfache Durchgriffsöffnungen des Flaschenkastens gebildet sind. Zwischen oberem Kastenrand und dem oberen Rand der Öffnung wird ein horizontal verlaufender Steg begrenzt, der als Horizontaler Tragegriff dient.

Üblicherweise werden derartige horizontale Tragegriffe in Art von U-, C- oder L-Querschnittsprofilen hergestellt. Abgesehen davon, daß diese Griffprofile noch kein komfortables Trageverhalten ermöglichen, läßt die Bruchstabilität solcher Tragegriffe zu wünschen übrig. Insbesondere bei häufiger Handhabung von mit vollen Flaschen gefüllten Kästen kann es zu einem Ausreißen von Tragegriffen kommen.

Aus der FR-A- 2 223 248 ist bereits ein Flaschenkasten aus Kunststoff mit vier Seitenwänden bekannt, der einen Kastenboden und mindestens einen Handgriff aufweist Obwohl im Flaschenkasten zumindest bereichsweise über den Umfang geschlossene Versteifungskanäle vorgesehen sind, kann es dennoch zum Ausreißen von Traggriffen kommen.

Des weiteren ist aus der EP-A- 0 289 230 bzw. der GB-A- 2 158 002 bereits bekannt, beim Spritzen von Kunststoffteilen Hohlräume durch das Einblasen von Inertgas herzustellen.

Außerdem ist aus der EP-A- 0 258 549 ein Flaschenkasten bekannt, der einen Mittelhandgriff zur Handhabung des Kastens aufweist. Der Mittelhandgriff erstreckt sich im Bereich der Kastenmitte vom Kastenboden oder von den Fachwänden der Facheinteilungen aus nach oben in Form eines auf dem Kopf stehenden U aus zwei Stützschenkeln und einem als Tragegriff dienenden, die Stützschenkel verbindenden Quersteg.

AusderUS-A-3506 154 ist ein Flaschenkasten mit doppelwanding ausgebildeten Seitenwänden und einem doppelwandigen Boden bekannt

Aufgabe der Erfindung ist es, einen Flaschenkasten aus Kunststoff herzustellen, der sich durch ein sehr hohe Verwindungssteifigkeit auszeichnet. Diese Verwindungssteifigkeit soll vor allem im Bereich der Tragegriffe, und zwar insbesondere im Bereich der Tragegriffe verwirklicht werden, wobei auch eine Erhöhung der Bruchstabilität erreicht werden soll, um ein Ausreißen der Tragegriffe auch unter schweren Lasten zu verhindem. Ferner sollen Flaschenkästen hergestellt werden, die bei gleichzeitig guter Verwindungssteifigkeit glatte Außenflächen aufweisen, die sich gut bedrucken lassen. Schließlich soll der Tragekomfort solcher Flaschenkästen erhöht werden

Diese Aufgabe wird erfindungsgemäß durch die jeweils im kennzeichnenden Teil der Ansprüche 1 und 2 enthaltenen Merkmale gelöst, wobei zweckmäßige Weiterbildungen der Erfindung durch die in den Unteransprüchen enthaltenen Merkmale gekennzeichnet sind.

Einfache Herstellverfahren ergiben sich aus den Merkmalen der Verfahrensansprüche.

Nach Maßgabe der Erfindung wird in Abweichung vom Stand der Technick von der offenen Profilform abgewichen und wird mit Herstellung des Flaschenkastens durch gezielte Einblasung von Gas unter Druck in den noch schmelzflüssigen Materialstrom zur Formung des Flaschenkastens eine Hohlraumbildung innerhalb des Materials des Flaschenkastens erreicht, so daß gemäß dem Anspruch 1 mindestens in dem den Handgriff bildenden Steg des Flaschenkastens geschlossene, hohle Versteifungskanäle ausgebildet sind.

Erfindungsgemäß sind die versteifungskanäle nach außen hin geschlossen.

Im Bereich der Tragegriffe ermöglicht ein solcher Versteifungskanal bzw. Hohlraum, der über dem Umfang vom Material des Kastenwand umschlossen ist, eine außerordentlich verwindungssteife Ausbildung eines Tragegriffes, der sich kastenförmig und damit als geschlossenes Profil verwirklichen läßt, was den Tragekomfort wesentlich erhöht und auch eine Schmutzansammlung weitgehend verhindert sowie umgekehrt eine gute Reinigung des Flaschenkastens erlaubt. Ferner läßt sich in bekannter Weise durch gezielte Einblasung von Hohlkanälen in kritische Bereiche des Flaschenkastens die Steifigkeit des Kastens entsprechend erhöhen. Beispielsweise ist es zweckmäßig, die Eckprofile der Flaschenkästen hohl auszubilden bzw. an den Seitenwänden angeformte vertikal verlaufende Stützprofile entsprechend hohl auszubilden. Aufgrund dieser Ausbildung lassen sich Rippenstrukturen vermeiden, wodurch sich die Reinigung der Flaschenkästen vereinfacht Infolge des Wegfalls der Rippenstrukturen können weitgehend glatte Außenflächen gewährleistet werden, die das Reinigen der Flaschenkästen vereinfachen, die Handhabung der Kästen erleichtern und auch im Falle von glatten Grifflächen den Tragekomfort erhöhen.

Vorteilhaft können auch Seitenwände des Flaschenkastens jeweils mit geschlossenen Hohlkammern ausgebildet werden, die durch Einblasen von Gas in den noch schmelzflüssigen Kunststoff während der Formgebung erzielt werden. Das Einblasen der Luft kann von den Seitenrändern, also von den Eckbereichen her erfolgen oder von Kastenunterseite her. Zweckmäßigeweise kann aber auch der Kasten umgekehrt angespritzt werden, was Insbesondere für die Ausbildung von horizontalen Tragegriffen mit geschlossenen Hohlräumen von Vorteil ist.

Nach Maßgabe der Erfindung lassen sich an Flaschenkästen gezielt Hohlräume durch gleichzeitiges oder zeitverzögertes Einspritzen von Gas in die Schmelze erzielen, wobei die Hohlräume von außen her nicht ersichtlich sind. Das Gas wird hierbei durch sehr schmale Düsen in die Kunststoffschmelze eingespritzt. Durch entsprechende Anordnung der Düsen und Ausrichtung der Düsen läßt sich die Hohlraumbildung gezielt beeinflussen.

Um ein Aufblasen der an der Kastenwand ausgebildeten Hohlräume zu verhindern, kann es zweckmäßig sein, an entsprechenden Stellen Entlüftungsöffnungen vorzusehen, die für einen kontrollierten Abbau des Gasüberdrucks sorgen.

Zweckmäßigerweise werden die Düsen so angeordnet, daß sie mehr oder weniger stationär mit dem Werkzeug sind und der fertiggestellte Flaschenkasten bei der Entformung aus dem Werkzeug von den Düsen abgehoben wird. In einer weiteren zweckmäßigen Alternative sind allerdings die Düsen beweglich angeordnet und werden für das Einblasen des Gases vorgestellt, so daß sie sich in den Schmelzfluß erstrecken. Am Ende des Fließvorganges werden die Düsen zurückgezogen, so daß sich selbsttätig diese kleinen Einspritzöffnungen verschließen. Dadurch lassen sich in einfacher Weise an den Enden geschlossene Hohlkanäle verwirklichen. Bevorzugt werden die Düsen möglichst dicht an dem gewünschten Hohlraum angeordnet.

Insgesamt lassen sich durch die erfindungsgemäßen Maßnahmen gezielt Hohlräume erreichen, die erfindungsgemäß im Traggriffbereich zu einer Erhöhung der Verwindungssteifigkeit und der Bruchfestigkeit beitragen. Zugleich entfällt hierbei das Erfordernis, den Tragegriff zwecks Optimierung der Festigkeit als U-, C-oder L- oder sonstige Profile auszubilden, die hinsichtlich des Tragekomforts eher ungünstig sind. Vielmehr läßt sich im Bereich des Tragegriffes ein in sich geschlossenes Kastenprofil in kompakter Ausführung verwirklichen, das ein bequemes Erfassen des Griffes durch die Hand ermöglicht. Ein weiter Vorteil dieser gezielten Hohlraumausbildung im Traggriffbereich besteht darin, daß die Hohlräume in die übrige Wand des Flaschenkastens hineinverlängert werden können, so daß die Festigkeit sich in die übrige Kastenwand fortsetzt, was eine erhöhte Bruchfestigkeit für den Tragegriff mit sich bringt. Auch führt die Einblasung von Gas zu einer Materialeinsparung bei der Herstellung von Flaschenkästen.

Nachfolgend werden bevorzugte Ausführungsbeispiele der Erfindung anhand der Zeichnung beschrieben. Darin zeigen in rein schematischer Darstellung
Fig. 1: eine Perspektivansicht des Flaschenkastens mit horizontalen Tragegriffen in den Kastenseitenwänden und Verstärkungsrinnen an der Kasteninnenwand,
Fig. 2: verschiedene Schnittansichten von konventionellen Tragegriffen gemäß Fig. 1,
Fig. 3: einen entsprechenden Querschnitt einer erfindungsgemäßen Ausführungsform eines Tragegriffes,
Fig. 4: eine konventionell angeformte Versteifungsrippe in einer Kastenseitenwand im Schnitt,
Fig. 5: die Ausführungsform einer Rippe nach der Erfindung im Schnitt,
Fig. 6: eine bevorzugte Richtung einer Gaseinblasung zur Bildung eines Hohlraums in einem Tragegriff,
Fig. 7: die Ansicht einer Kastenseitenwand mit einem U-förmig verlaufenden Hohlkanal,
Fig. 8 und 9: weitere Ausführungsformen von Hohlraumausbildungen in Flaschenkästen.
Fig. 10 und 11: eine weitere Ausführungsform, wobei Fig. 10 eine Draufsicht und Fig. 11 einen Schnitt von Fig. 10 zeigt.

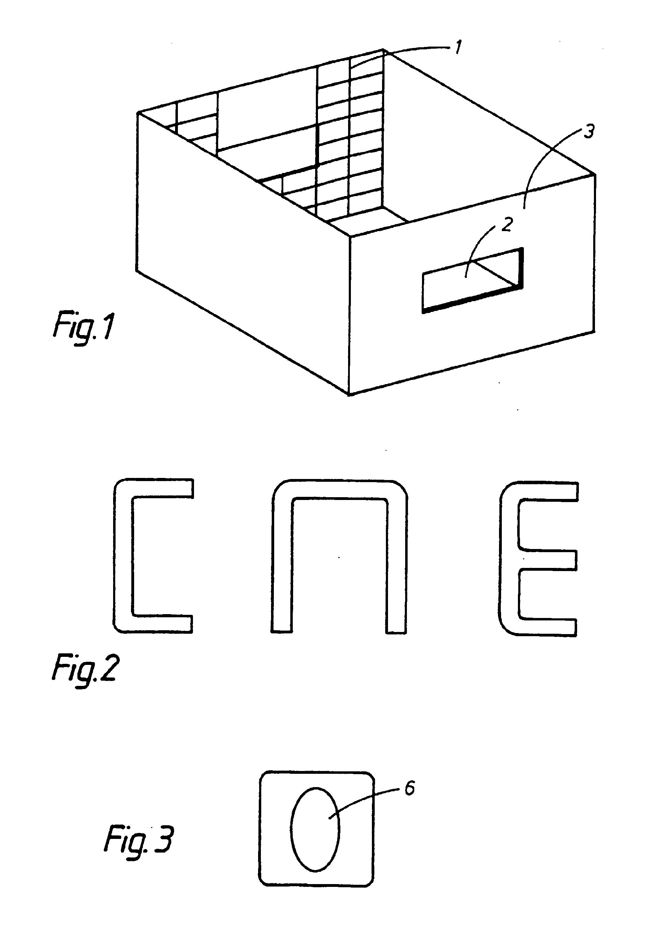

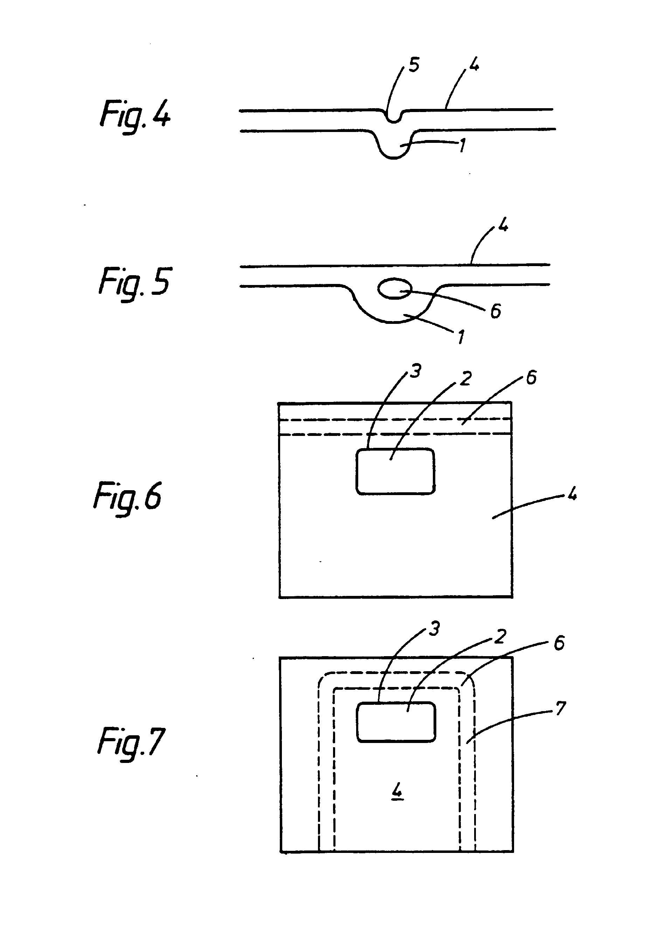

Fig. 1 zeigt in rein schematischer Darstellung einen Flaschenkasten mit in den Seitenwänden ausgebildeten Durchgriffsöffnungen 2, wobei der oberhalb der Durchgriffsöffnungen 2 verbleibende Quersteg, der zugleich den oberen Kastenrand bildet, den eigentlichen Tragegriff 3 des Flaschenkastens darstellt. Ferner sind rein schematisch in Fig. 1 an einer Innenwand des Flaschenkastens vertikal und horizontal verlaufende Rippen 1 dargestellt, die zur Erhöhung der Verwindungssteifigkeit des Flaschenkastens dienen. Fig. 2 zeigt konventionelle Profilformen von Tragegriffen, wohingegen Fig. 3 einen Schnitt durch einen Tragegriff 3 darstellt, aus dem die Form des Hohlkanals 6 anschaulich hervorgeht Wie Fig. 3 zeigt, ist die Querschnittsform des Hohlkanals bevorzugt oval, aber je nach Ausführungsform auch kreisrund.

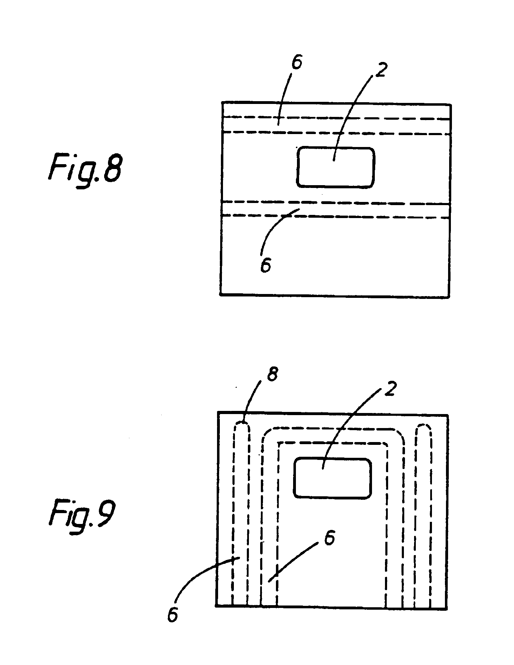

Fig. 4 zeigt eine konventionelle Rippenausbildung in einer Seitenwand 4, wobei recht deutlich eine Einfallstelle 5 ersichtlich ist, die sich aufgrund der unterschiedlichen Massenansammlung im Rippenbereich beim Abkühlen des geformten Flaschenkastens einstellt. Fig. 5 zeigt eine Rippenausbildung 1, bei der eine Versteifung durch einen durch Gaseinblasung erzeugten Kanal 6 erreicht ist Der Hohlkanal 6 erstreckt sich hierbei im wesentlichen über die gesamte Länge der Rippe 1. Fig. 6 zeigt eine Seitenansicht eines Flaschenkastens mit einem Tragegriff 3 oberhalb einer Durchgriffsöffnung 2, wobei über die gesamte Länge der Seitenwand 4 am oberen Rand ein durch Gaseinblasung erzeugter Hohlkanal 6 ausgebildet ist Der Hohlkanal 6 ist durch strichlierte Linien dargestellt. Er erstreckt sich von einem Ende der Seitenwand zum anderen und ist durch seitliches Einblasen von Gas während der Formung des Flaschenkastens hergestellt worden. Im besonderen erstreckt sich der Hohlkanal 6 durch den Tragegriff 3, so daß sich eine Tragegriffausbildung gemäß Fig. 3 ergibt. Bei der Ausführungsform nach Fig. 7 ist die Gaseinblasung vom Kastenboden her erfolgt, wobei der Gasstrom U-förmig gelenkt ist und sich somit ein U-förmiger Hohlkanal 6 ausbildet, der zu einer hohlen Ausbildung des Tragegriffes 3 und zu einer Versteifung der Kastenseitenwand 4 infolge der hohlen U-Schenkel 7 des Hohlkanals 6 führt Ersichtlich wird hierdurch eine sehr ausreißfeste Traggriffkonstruktion realisiert. In der Ausführungsform nach Fig. 8 sind beidseits der Durchgriffsöffnung zwei Hohlkanäle 6 ausgebildet, was zu einer sehr großen Verwindungssteifigkeit des Flaschenkastens, insbesondere im Griffbereich, führt. Eine solche Ausführungsform eignet sich insbesondere auch für Flaschenkästen mit vergleichsweise großen Öffnungen in der Seitenwand, die als Schauflächen für die im Kasten aufgenommenen Flaschen dienen Hierbei ist es zweckmäßig, die Hohlkanäle 6 längs der Ränder der fensterartigen Öffnungen auszurichten. Bei der Ausführungsform nach Fig. 9 ist ein U-förmiger Hohlkanal 6 ausgebildet. Die Eckbereiche des Flaschenkastens sind durch sich vertikale erstreckende Hohlkanäle 6 versteift, wobei diese Hohlkanäle oben bei 8 geschlossen, unten jedoch offen sein können. Beim U-förmigen Hohlkanal 6 sind jedoch bevorzugt die beiden unteren Enden, die im Boden ausmünden, geschlossen, was ebenso für die Enden des Hohlkanals 6 zutrifft, der in den Figuren 6, 7 und 8 gezeigt ist.

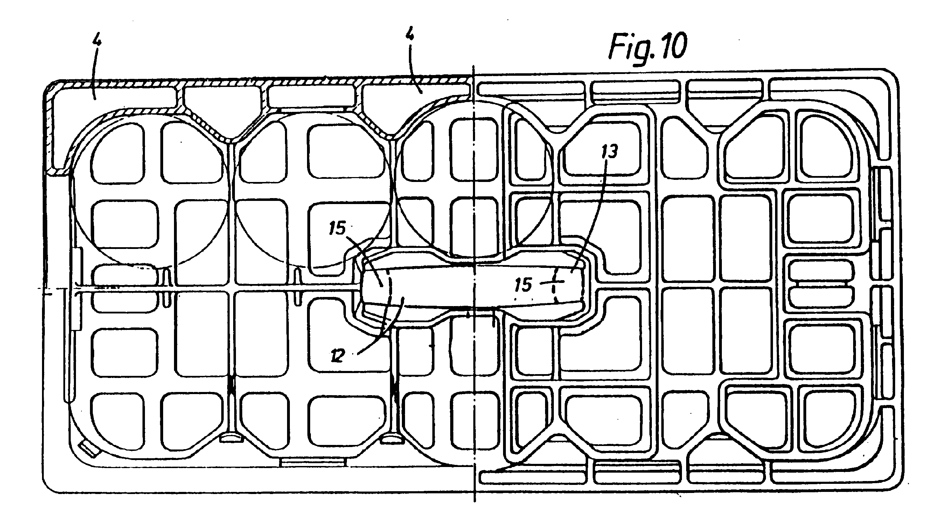

Fig. 10 zeigt einen Flaschenkasten mit einem Mittelhandgriff 11, von dem nur der als Tragegriff dienende Quersteg 12 in Fig. 10 dargestellt ist. Der Mittelhandgriff erstreckt sich entweder vom Kastenboden oder von den Fachwänden her in Form zweier gegenüberliegender Stützschenkel 13 nach oben, die in dem im wesentlichen horizontal verlaufenden Quersteg 12 einmünden und im übrigen mit diesem ebenso wie mit dem übrigen Kasten einstückig ausgeformt sind.

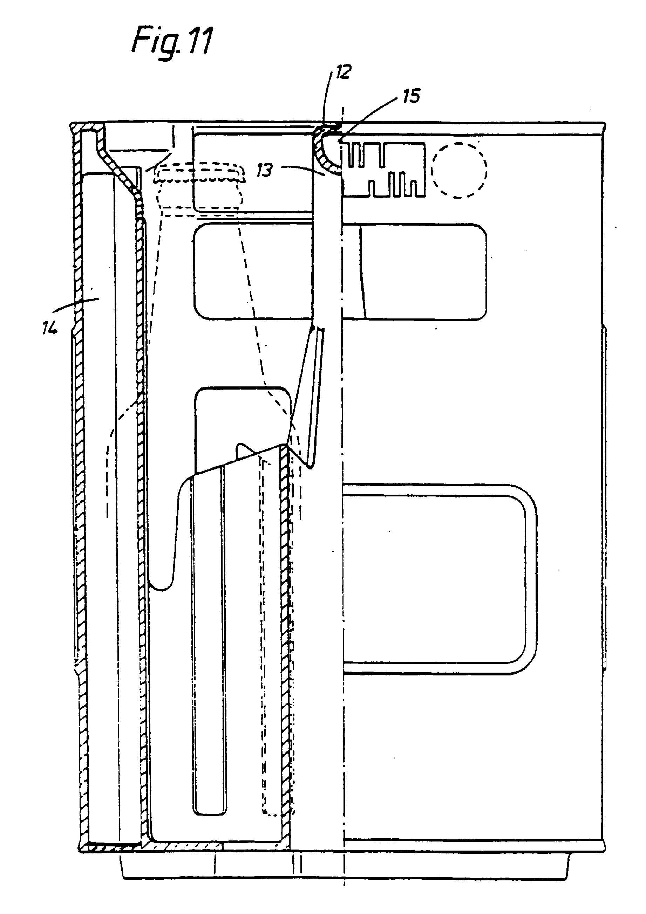

Im dargestellten Ausführungsbeispiel ist dieser Mittelhandgriff 11 über seine gesamte Länge, also über die Länge der beiden Stützschenkel 13 und die Länge des die beiden Stützschenkel verbindenden Querstegs als geschlossenes Hohlprofil ausgebildet, wie sich insbesondere aus dem Schnitt des Querstegs 12 in Fig. 11 ergibt. An seinen Enden, also im Bereich der Einmündung des Mittelhandgriffes in den Kastenboden oder in die Fachwände kann das mit 15 bezeichnete Hohlprofil des Mittelhandgriffs entweder geschlossen oder aber auch offen ausgebildet sein.

Die Herstellung des Hohlprofils erfolgt dadurch, daß bei der Formung des Flaschenkastens in die Schmelze Gas eingeblasen wird, wobei das Gas in der plastischen Seele des Formteiles zur Bildung des Mittelhandgriffs strömt, ohne sich mit dem Material zu vermischen, und innerhalb des Mittelhandgriffes einen Hohlraum infolge des eingeblasenen Gaspolsters ausbildet.

Das Schließen dieses Hohlraumes 15 an beiden Enden des Mittelhandgriffes 11, also im Bereich der Einmündung in den Kastenboden und in den Kastenwänden erfolgt dadurch, daß entweder die Düse vor Verfestigung der Materialschmelze abgezogen oder der Formkasten vor Verfestigung der Materialschmelze von der Düse, d.h. vom Werkzeug insgesamt abgezogen wird. Das Verschließen des Hohlraumes kann auch durch andere geeignete Maßnahmen erfolgen.

Zweckmäßig ist auch eine bereichsweise Ausbildung des Hohlkanals 15, insbesondere die Ausbildung eines Hohlraums im Quersteg 12, wobei sich dieser Hohlraum noch ein gewisses Maß in den Randbereich der benachbarten vertikalen Stützleisten 13 erstrecken kann. Zweckmäßig ist auch eine Ausbildung eines Hohlraums im wesentlichen Bereich der vertikalen Stützschenkel 13, wobei in vorteilhafter Weise der Hohlraum auch geringfügig in den anschließenden Bereich des Querstegs 12 herübergezogen ist. Im Falle einer Hohlraumausbildung in beiden Stützprofilen 13, kann das Einblasen von Gas von beiden Seiten des Mittelhandgriffs her erfolgen. In einer geeigneten Ausführungsform wurde mit einem Druck im Bereich von 200 bar das Gas eingeblasen.

In Ergänzung zum hohlraumausgebildeten Mittelhandgriff können auch im Bereich der Kastenwände Hohlprofile durch Gaseinblasung vorgesehen sein, etwa in den Kastenecken oder in den mit 14 in den Zeichnungen bezeichneten Stützprofilen, die sich vertikal erstrecken und von denen eines in Fig. 2 im Längsschnitt dargestellt ist.

Durch die Ausbildung von insbesondere allseitig und auch an den Enden geschlossener Hohlprofile ergibt sich nicht nur eine Materialersparnis bei der Herstellungvon Flaschenkästen, sondern auchfürdieTraggriffe eine erhöhte Bruchfestigkeit gegen Ausreißen des Griffes.

### Fassung geltend für den Staat DE

Die Erfindung betrifft einen Flaschenkasten aus Kunststoff gemäß den Oberbegriffen der Patentansprüche 1 und 2 sowie Verfahren zur Herstellung solcher Flaschenkästen.

Flaschenkästen aus Kunststoff bestehen üblicherweise aus zwei schmalen und zwei langen Seitenwänden und einem offen strukturierten Kastenboden, wobei gegebenenfalls im Kasteninneren eine Facheinteilung, bestehend aus vorzugsweise über Kreuz angeordneten Fachwänden, angeordnet ist. Zum Tragen weisen derartige Flaschenkästen zumeist Handgriffe auf, die durch einfache Durchgriffsöffnungen des Flaschenkastens gebildet sind. Zwischen oberem Kastenrand und dem oberen Rand der Öffnung wird ein horizontal verlaufender Steg begrenzt, der als Horizontaler Tragegriff dient.

Üblicherweise werden derartige horizontale Tragegriffe in Art von U-, C- oder L-Querschnittsprofilen hergestellt. Abgesehen davon, daß diese Griffprofile noch kein komfortables Trageverhalten ermöglichen, läßt die Bruchstabilität solcher Tragegriffe zu wünschen übrig. Insbesondere bei häufiger Handhabung von mit vollen Flaschen gefüllten Kästen kann es zu einem Ausreißen von Tragegriffen kommen.

Aus der FR-A-2 223 248 ist bereits ein Flaschenkasten aus Kunststoff mit vier Seitenwänden bekannt, der einen Kastenboden und mindestens einen Handgriff aufweist. Obwohl im Flaschenkasten zumindest bereichsweise über den Umfang geschlossene Versteifungskanäle vorgesehen sind, kann es dennoch zum Ausreißen von Traggriffen kommen.

Des weiteren ist aus der EP-A-0 289 230 bzw der GB-A-2 158 002 bereits bekannt, beim Spritzen von Kunststoffteilen Hohlräume durch das Einblasen von Inertgas herzustellen.

Außerdem ist aus der EP-A-0 258 549 ein Flaschenkasten bekannt, der einen Mittelhandgriff zur Handhabung des Kastens aufweist. Der Mittelhandgriff erstreckt sich im Bereich der Kastenmitte vom Kastenboden oder von den Fachwänden der Facheinteilungen aus nach oben in Form eines auf dem Kopf stehenden U aus zwei Stützschenkeln und einem als Tragegriff dienenden, die Stützschenkel verbindenden Quersteg

Aus der US-A-3 506 154 ist ein Flaschenkasten mit doppelwandig ausgebildeten Seitenwänden und einem doppelwandigen Boden bekannt

Weiterhin ist das Dokument DE-U-78 19 399 bekannt, in dem ein Flaschenkasten aus Kunststoff offenbart ist, der einen einstückig angeformten Mittelhandgriff enthält, wobei Bereiche des Flaschenkastens hohl ausgebildet sind. Die Handgriffe in der in diesem Dokument offenbarten Struktur werden nach unten durch horizontal verlaufende Versteifungsstege begrenzt.

Bezüglich der Bundesrepublik Deutschland ist das Dokument DE-A 38 23 650 ein nachveröffentlichtes nationales Dokument. Dieses Dokument offenbart einen Kasten, wobei eine Ausführungsform dieses Kastens einen durch Gasinjektion während des Spritzvorganges gebildeten Hohlraum enthält. Dieser Hohlraum bildet einen hohlen versteifungskanal, der an seinen Enden offensichtlicherweise geöffnet ist, wie das bei einer Gaseinspritzung nicht anders zu erwarten ist. Die offene Ausbildung dieser Versteifungskanäle gemäß der oben genannten Entgegenhaltung birgt jedoch erhebliche Nachteile.

Aufgabe der Erfindung ist es, einen Flaschenkasten aus Kunststoff herzustellen, der sich durch eine sehr hohe Verwindungssteifigkeit auszeichnet. Diese Verwindungssteifigkeit soll vor allem im Bereich der Tragegriffe, und zwar insbesondere im Bereich horizontaler Tragegriffe verwirklicht werden, wobei auch eine Erhöhung der Bruchstabilität erreicht werden soll, um ein Ausreißen der Tragegriffe auch unter schweren Lasten zu verhindern. Ferner sollen Flaschenkästen hergestellt werden, die bei gleichzeitig guter Verwindungssteifigkeit glatte Außenflächen aufweisen, die sich gut bedrucken lassen Schließlich soll der Tragekomfort solcher Flaschenkästen erhöht werden.

Diese Aufgabe wird erfindungsgemäß durch die jeweils im kennzeichnenden Teil der Ansprüche 1 und 2 enthaltenen Merkmale gelöst, wobei zweckmäßige Weiterbildungen der Erfindung durch die in den Unteransprüchen enthaltenen Merkmale gekennzeichnet sind.

Einfache Herstellverfahren ergiben sich aus den Merkmalen der Verfahrensansprüche.

Nach Maßgabe der Erfindung wird in Abweichung vom Stand der Technick von der offenen Profilform abgewichen und wird mit Herstellung des Flaschenkastens durch gezielte Einblasung von Gas unter Druck in den noch schmelzflüssigen Materialstrom zur Formung des Flaschenkastens eine Hohlraumbildung innerhalb des Materials des Flaschenkastens erreicht, so daß gemäß dem Anspruch 1 mindestens in dem den Handgriff bildenden Steg des Flaschenkastens geschlossene, hohle Versteifungskanäle ausgebildet sind.

Erfindungsgemäß sind die versteifungskanäle nach außen hin geschlossen.

Im Bereich der Tragegriffe ermöglicht ein solcher Versteifungskanal bzw. Hohlraum, der über dem Umfang vom Material des Kastenwand umschlossen ist, eine außerordentlich verwindungssteife Ausbildung eines Tragegriffes, der sich kastenförmig und damit als geschlossenes Profil verwirklichen läßt, was den Tragekomfort wesentlich erhöht und auch eine Schmutzansammlung weitgehend verhindert sowie umgekehrt eine gute Reinigung des Flaschenkastens erlaubt Ferner läßt sich in bekannter Weise durch gezielte Einblasung von Hohlkanälen in kritische Bereiche des Flaschenkastens die Steifigkeit des Kastens entsprechend erhöhen Beispielsweise ist es zweckmäßig, die Eckprofile der Flaschenkästen hohl auszubilden bzw. an den Seitenwänden angeformte vertikal verlaufende Stützprofile entsprechend hohl auszubilden. Aufgrund dieser Ausbildung lassen sich Rippenstrukturen vermeiden, wodurch sich die Reinigung der Flaschenkästen vereinfacht Infolge des Wegfalls der Rippenstrukturen können weitgehend glatte Außenflächen gewährleistet werden, die das Reinigen der Flaschenkästen vereinfachen, die Handhabung der Kästen erleichtern und auch im Falle von glatten Grifflächen den Tragekomfort erhöhen.

Vorteilhaft können auch Seitenwände des Flaschenkastens jeweils mit geschlossenen Hohlkammern ausgebildet werden, die durch Einblasen von Gas In den noch schmelzflüssigen Kunststoff während der Formgebung erzielt werden. Das Einblassen der Luft kann von den Seitenwändern, also von den Eckbereichen her erfolgen oder von Kastenunterseite her. Zweckmäßigeweise kann aber auch der Kasten umgekehrt angespritzt werden, was insbesondere für die Ausbidung von horizontalen Tragegriffen mit geschlossenen Hohlräumen von Vorteil ist.

Nach Maßgabe der Erfindung lassen sich an Flaschenkästen gezielt Hohlräume durch gleichzeitiges oder zeitverzögertes Einspritzen von Gas in die Schmelze erzielen, wobei die Hohlräume von außen her nicht ersichtlich sind. Das Gas wird hierbei durch sehr schmale Düsen in die Kunststoffschmelze eingespritzt. Durch entsprechende Anordnung der Düsen und Ausrichtung der Düsen läßt sich die Hohlraumbildung gezielt beeinflussen.

Um ein Aufblasen der an der Kastenwand ausgebildeten Hohlräume zu verhindern, kann es zweckmäßig sein, an entsprechenden Stellen Entlüftungsöffnungen vorzusehen, die für einen kontrollierten Abbau des Gasüberdrucks sorgen.

Zweckmäßigerweise werden die Düsen so angeordnet, daß sie mehr oder weniger stationär mit dem Werkzeug sind und der fertiggestellte Flaschenkasten bei der Entformung aus dem Werkzeug von den Düsen abgehoben wird. In einer weiteren zweckmäßigen Alternative sind allerdings die Düsen beweglich angeordnet und werden für das Einblasen des Gases vorgestellt, so daß sie sich in den Schmelzfluß erstrecken. Am Ende des Fließvorganges werden die Düsen zurückgezogen, so daß sich selbsttätig diese kleinen Einspritzöffnungen verschließen. Dadurch lassen sich in einfacher Weise an den Enden geschlossene Hohlkanäle verwirklichen. Bevorzugt werden die Düsen möglichst dicht an dem gewünschten Hohlraum angeordnet.

Insgesamt lassen sich durch die erfindungsgemäßen Maßnahmen gezielt Hohlräume erreichen, die erfindungsgemäß im Traggriffbereich zu einer Erhöhung der Verwindungssteifigkeit und der Bruchfestigkeit beitragen. Zugleich entfällt hierbei das Erfordernis, den Tragegriff zwecks Optimierung der Festigkeit als U-, C-oder L- oder sonstige Profile auszubilden, die hinsichtlich des Tragekomforts eher ungünstig sind. Vielmehr läßt sich im Bereich des Tragegriffes ein in sich geschlossenes Kastenprofil in kompakter Ausführung verwirklichen, das ein bequemes Erfassen des Griffes durch die Hand ermöglicht. Ein weiter Vorteil dieser gezielten Hohlraumausbildung im Traggriffbereich besteht darin, daß die Hohlräume in die übrige Wand des Flaschenkastens hineinverlängert werden können, so daß die Festigkeit sich in die übrige Kastenwand fortsetzt, was eine erhöhte Bruchfestigkeit für den Tragegriff mit sich bringt Auch führt die Einblasung von Gas zu einer Materialeinsparung bei der Herstellung von Flaschenkästen.

Nachfolgend werden bevorzugte Ausführungsbeispiele der Erfindung anhand der Zeichnung beschrieben. Darin zeigen in rein schematischer Darstellung
Fig. 1: eine Perspektivansicht des Flaschenkastens mit horizontalen Tragegriffen in den Kastenseitenwänden und Verstärkungsrinnen an der Kasteninnenwand,
Fig. 2: verschiedene Schnittansichten von konventionellen Tragegriffen gemäß Fig. 1,
Fig. 3: einen entsprechenden Querschnitt einer erfindungsgemäßen Ausführungsform eines Tragegriffes,
Fig. 4: eine konventionell angeformte Versteifungsrippe in einer Kastenseitenwand im Schnitt,
Fig. 5: die Ausführungsform einer Rippe nach der Erfindung im Schnitt,
Fig. 6: eine bevorzugte Richtung einer Gaseinblasung zur Bildung eines Hohlraums in einem Tragegriff,
Fig. 7: die Ansicht einer Kastenseitenwand mit einem U-förmig verlaufenden Hohlkanal,
Fig. 8 und 9: weitere Ausführungsformen von Hohlraumausbildungen in Flaschenkästen.
Fig. 10 und 11: eine weitere Ausführungsform, wobei Fig. 10 eine Draufsicht und Fig. 11 einen Schnitt von Fig. 10 zeigt

Fig. 1 zeigt in rein schematischer Darstellung einen Flaschenkasten mit in den Setenwänden ausgebildeten Durchgriffsöffnungen 2, wobei der oberhalb der Durchgriffsöffnungen 2 verbleibende Quersteg, der zugleich den oberen Kastenrand bildet, den eigentlichen Tragegriff 3 des Flaschenkastens darstellt. Ferner sind rein schematisch in Fig. 1 an einer Innenwand des Flaschenkastens vertikal und horizontal verlaufende Rippen 1 dargestellt, die zur Erhöhung der Verwindungssteifigkeit des Flaschenkastens dienen. Fig. 2 zeigt konventionelle Profilformen von Tragegriffen, wohingegen Fig. 3 einen Schnitt durch einen Tragegriff 3 darstellt, aus dem die Form des Hohlkanals 6 anschaulich hervorgeht. Wie Fig. 3 zeigt, ist die Querschnittsform des Hohlkanals bevorzugt oval, aber je nach Ausführungsform auch kreisrund.

Fig. 4 zeigt eine konventionelle Rippenausbildung in einer Seitenwand 4, wobei recht deutlich eine Einfallstelle 5 ersichtlich ist, die sich aufgrund der unterschiedlichen Massenansammlung im Rippenbereich beim Abkühlen des geformten Flaschenkastens einstellt Fig. 5 zeigt eine Rippenausbildung 1, bei der eine Versteifung durch einen durch Gaseinblasung erzeugten Kanal 6 erreicht ist. Der Hohlkanal 6 erstreckt sich hierbei im wesentlichen über die gesamte Länge der Rippe 1. Flg. 6 zeigt eine Seitenansicht eines Flaschenkastens mit einem Tragegriff 3 oberhalb einer Durchgriffsöffnung 2, wobei über die gesamte Länge der Seitenwand 4 am oberen Rand ein durch Gaseinblasung erzeugter Hohlkanal 6 ausgebildet ist. Der Hohlkanal 6 ist durch strichlierte Linien dargestellt. Er erstreckt sich von einem Ende der Seitenwand zum anderen und ist durch seitliches Einblasen von Gas während der Formung des Flaschenkastens hergestellt worden. Im besonderen erstreckt sich der Hohlkanal 6 durch den Tragegriff 3, so daß sich eine Tragegriffausbildung gemäß Fig. 3 ergibt. Bei der Ausführungsform nach Fig. 7 ist die Gaseinblasung vom Kastenboden her erfolgt, wobei der Gasstrom U-förmig gelenkt ist und sich somit ein U-förmiger Hohlkanal 6 ausbildet, der zu einer hohlen Ausbildung des Tragegriffes 3 und zu einer Versteifung der Kastenseitenwand 4 infolge der hohlen U-Schenkel 7 des Hohlkanals 6 führt Ersichtlich wird hierdurch eine sehr ausreißfeste Traggriffkonstruktion realisiert. In der Ausführungsform nach Fig. 8 sind beidseits der Durchgriffsöffnung zwei Hohlkanäle 6 ausgebildet, was zu einer sehr großen Verwindungssteifigkeit des Flaschenkastens, insbesondere im Griffbereich, führt. Eine solche Ausführungsform eignet sich insbesondere auch für Flaschenkästen mit vergleichsweise großen Öffnungen in der Seitenwand, die als Schauflächen für die im Kasten aufgenommenen Flaschen dienen. Hierbei ist es zweckmäßig, die Hohlkanäle 6 längs der Ränder der fensterartigen Öffnungen auszurichten. Bei der Ausführungsform nach Fig. 9 ist ein U-förmiger Hohlkanal 6 ausgebildet. Die Eckbereiche des Flaschenkastens sind durch sich vertikale erstreckende Hohlkanäle 6 versteift, wobei diese Hohlkanäle oben bei 8 geschlossen, unten jedoch offen sein können. Beim U-förmigen Hohlkanal 6 sind jedoch bevorzugt die beiden unteren Enden, die im Boden ausmünden, geschlossen, was ebenso für die Enden des Hohlkanals 6 zutrifft, der in den Figuren 6, 7 und 8 gezeigt ist.

Fig. 10 zeigt einen Flaschenkasten mit einem Mittelhandgriff 11, von dem nur der als Tragegriff dienende Quersteg 12 in Fig. 10 dargestellt ist. Der Mittelhandgriff erstreckt sich entweder vom Kastenboden oder von den Fachwänden her in Form zweier gegenüberliegender Stützschenkel 13 nach oben, die in dem im wesentlichen horizontal verlaufenden Quersteg 12 einmünden und im übrigen mit diesem ebenso wie mit dem übrigen Kasten einstückig ausgeformt sind.

Im dargestellten Ausführungsbeispiel ist dieser Mittelhandgriff 11 über seine gesamte Länge, also über die Länge der beiden Stützschenkel 13 und die Länge des die beiden Stützschenkel verbindenden Querstegs als geschlossenes Hohlprofil ausgebildet, wie sich insbesondere aus dem Schnitt des Querstegs 12 in Fig. 11 ergibt. An seinen Enden, also im Bereich der Einmündung des Mittelhandgriffes in den Kastenboden oder in die Fachwände kann das mit 15 bezeichnete Hohlprofil des Mittelhandgriffs entweder geschlossen oder aber auch offen ausgebildet sein.

Die Herstellung des Hohlprofils erfolgt dadurch, daß bei der Formung des Flaschenkastens in die Schmelze Gas eingeblasen wird, wobei das Gas in der plastischen Seele des Formteiles zur Bildung des Mittelhandgriffs strömt, ohne sich mit dem Material zu vermischen, und innerhalb des Mittelhandgriffes einen Hohlraum infolge des eingeblasenen Gaspolsters ausbildet.

Das Schließen dieses Hohlraumes 15 an beiden Enden des Mittelhandgriffes 11, also im Bereich der Einmündung in den Kastenboden und in den Kastenwänden erfolgt dadurch, daß entweder die Düse vor Verfestigung der Materialschmelze abgezogen oder der Formkasten vor Verfestigung der Materialschmelze von der Düse, d.h. vom Werkzeug insgesamt abgezogen wird. Das Verschließen des Hohlraumes kann auch durch andere geeignete Maßnahmen erfolgen.

Zweckmäßig ist auch eine bereichsweise Ausbildung des Hohlkanals 15, insbesondere die Ausbildung eines Hohlraums im Quersteg 12, wobei sich dieser Hohlraum noch ein gewisses Maß in den Randbereich der benachbarten vertikalen Stützleisten 13 erstrecken kann. Zweckmäßig ist auch eine Ausbildung eines Hohlraums im wesentlichen Bereich der vertikalen Stützschenkel 13, wobei in vorteilhafter Weise der Hohlraum auch geringfügig in den anschließenden Bereich des Querstegs 12 herübergezogen ist. Im Falle einer Hohlraumausbildung in beiden Stützprofilen 13, kann das Einblasen von Gas von beiden Seiten des Mittelhandgriffs her erfolgen. In einer geeigneten Ausführungsform wurde mit einem Druck im Bereich von 200 bar das Gas eingeblasen.

In Ergänzung zum hohlraumausgebildeten Mittelhandgriff können auch im Bereich der Kastenwände Hohlprofile durch Gaseinblasung vorgesehen sein, etwa in den Kastenecken oder in den mit 14 in den Zeichnungen bezeichneten Stützprofilen, die sich vertikal erstrecken und von denen eines in Fig. 2 im Längsschnitt dargestellt ist

Durch die Ausbildung von insbesondere allseitig und auch an den Enden geschlossener Hohlprofile ergibt sich nicht nur eine Materialersparnis bei der Herstellungvon Flaschenkästen, sondern auchfürdieTraggriffe eine erhöhte Bruchfestigkeit gegen Ausreißen des Griffes.

## Patentansprüche (Patentansprüche für folgende(n) Vertragsstaat(en) : AT, BE, CH, FR, GB, IT, LI, LU, NL, SE)

1. Flaschenkasten aus Kunststoff mit vier Seitenwänden (4), einem Kastenboden und mindestens einem Handgriff (3), dadurch gekennzeichnet, daß mindestens in dem den Handgriff bildenden Steg (3) des Flaschenkastens ein oder mehrere durch Gaseinblasung gebildete, über den Umfang geschlossene, hohle Versteifungskanäle (6) ausgebildet sind.

2. Flaschenkasten aus Kunststoff mit vier Seitenwänden (4), einem Kastenboden und einem einstückig angeformten Mittelhandgriff, der sich im Bereich der Kastenmitte vom Kastenboden aus oder von Fachwänden der Facheinteilung aus nach oben in Form eines auf dem Kopf stehenden U aus zwei Stützschenkeln (13) und einem als Tragegriff dienenden, die Stützschenkel verbindenden Quersteg (12) erstreckt, dadurch gekennzeichnet, daß die Stützschenkel (13) und der Quersteg (12) über ihre gesamte Länge quer zur tangs verlaufenden Mittelachse des Mittelhandgriffs (11) ein geschlossenes Profil (15) aufweisen, und daß zumindest im Quersteg (12) und den hierzu unmittelbar benachbarten anschließenden Bereichen der Stützschenkel (13) oder zumindest in den Stützschenkeln (13) und in daran unmittelbar benachbarten Bereichen des Querstegs (12) oder über die gesamte Länge des Mittelhandgriffs ein durch Gaseinblasung gebildeter, über den Umfang geschlossener, hohler Versteifungskanal (6) ausgebildet ist

3. Kasten nach Anspruch 1 oder 2, dadurch gekennzeichnet, daß die hohlen Versteifungskanäle (6) an mindestens einem, vorzugsweise an beiden Enden geschlossen sind.

4. Kasten nach einem der vorhergehenden Ansprüche, dadurch gekennzeichnet, daß sich Versteifungskanäle (6) im wesentlichen über die gesamte Länge und/oder Höhe der Seitenwände (4) erstrekken.

5. Verfahren zur Herstellung eines Flaschenkastens gemäß den Patentansprüchen 1, 3 oder 4, dadurch gekennzeichnet, daß zur Bildung der Versteifungskanäle (6) seitlich gezielt Gas unter Druck in die in das Werkzeug zur Formung des Kastens eingespritzte Materialschmelze während der Formung des Flaschenkastens eingeblasen oder daß vom Kastenboden her gezielt Gas unter Druck in die in das Werkzeug zur Formung des Kastens eingespritzte Materialschmelze während der Formung des Flaschenkastens eingeblasen wird, wobei der Gasstrom U-förmig zur Bildung eines U-förmigen Versteifungskanals (6) in den Traggriff gelenkt wird.

6. Verfahren zur Herstellung eines Flaschenkastens aus Kunststoff gemäß den Patentansprüchen 2, 3 oder 4, dadurch gekennzeichnet, daß zur Formung eines Flaschenkastens mit einem hohl ausgebildeten Mittelhandgriff die Einspritzung der Materialschmelze und des Gases vom Kastenboden her in die Form für die Stützschenkel (13) des Mittelhandgriffes erfolgt oder von den oberen Enden der Stützschenkel (13) und/odervom Quersteg (12) des Mittelhandgriffes her.

7. Verfahren nach Anspruch 5 oder 6, dadurch gekennzeichnet, daß die Gaseinblasung möglichst nahe der Ausbildung der Versteifungskanäle (6) und gezielt in Richtung der Hauptachse der Versteifungskanäle (6) erfolgt

## Patentansprüche (Patentansprüche für folgende(n) Vertragsstaat(en) : DE)

1. Flaschenkasten aus Kunststoff mit vier Seitenwänden (4), einem Kastenboden und mindestens einem Handgriff (3), dadurch gekennzeichnet, daß mindestens in dem dem Handgriff bildenden Steg (3) des Flaschenkastens ein oder mehrere durch Gaseinblasung gebildete, über den Umfang geschlossene, hohle Versteifungskanäle (6) ausgebildet sind, die an mindestens einem, vorzugsweise an beiden Enden geschlossen sind.

2. Flaschenkasten aus Kunststoff mit vier Seitenwänden (4), einem Kastenboden und einem einstückig angeformten Mittelhandgriff, der sich im Bereich der Kastenmitte vom Kastenboden aus oder von Fachwänden der Facheinteilung aus nach oben in Form eines auf dem Kopf stehenden U aus zwei Stützschenkeln (13) und einem als Tragegriff dienenden, die Stützschenkel verbindenden Quersteg (12) erstreckt, dadurch gekennzeichnet, daß die Stützschenkel (13) und der Quersteg (12) über ihre gesamte Länge quer zurtangs verlaufenden Mittelachse des Mittelhandgriffs (11) ein geschlossenes Profil (15) aufweisen, und daß zumindest im Quersteg (12) und den hierzu unmittelbar benachbarten anschließenden Bereichen der Stützschenkel (13) oder zumindest in den Stützschenkeln (13) und in daran unmittelbar benachbarten Bereichen des Querstegs (12) oder über die gesamte Länge des Mittelhandgriffs ein durch Gaseinblasung gebildeter, über den Umfang geschlossener, hohler Versteifungskanal (6) ausgebildet ist.

3. Kasten nach Anspruch 2, dadurch gekennzeichnet, daß die hohlen Versteifungskanäle (6) an mindestens einem, vorzugsweise an beiden Enden geschlossen sind.

4. Kasten nach einem der vorhergehenden Ansprüche, dadurch gekennzeichnet, daß sich Versteifungskanäle (6) im wesentlichen über die gesamte Länge und/oder Höhe der Seitenwände (4) erstrekken.

5. Verfahren zur Herstellung eines Flaschenkastens gemäß den Patentansprüchen 1, 3 oder 4, dadurch gekennzeichnet, daß zur Bildung der Versteifungskanäle (6) seitlich gezielt Gas unter Druck in die in das Werkzeug zur Formung des Kastens eingespritzte Materialschmelze während der Formung des Flaschenkastens eingeblasen oder daß vom Kastenboden hergezielt Gas unter Druck in die in das Werkzeug zur Formung des Kastens eingespritzte Materialschmelze während der Formung des Flaschenkastens eingeblasen wird, wobei der Gasstrom U-förmig zur Bildung eines U-förmigen Versteifungskanals (6) in den Traggriff gelenkt wird.

6. Verfahren zur Herstellung eines Flaschenkastens aus Kunststoff gemäß den Patentansprüchen 2, 3 oder 4, dadurch gekennzeichnet, daß zur Formung eines Flaschenkastens mit einem hohl ausgebildeten Mittelhandgriff die Einspritzung der Materialschmelze und des Gases vom Kastenboden her in die Form für die Stützschenkel (13) des Mittelhandgriffes erfolgt oder von den oberen Enden der Stützschenkel (13) und/oder vom Quersteg (12) des Mittelhandgriffes her.

7. Verfahren nach Anspruch 5 oder 6, dadurch gekennzeichnet, daß die Gaseinblasung möglichst nahe derAusbidung der Versteifungskanäle (6) und gezielt in Richtung der Hauptachse der Versteifungskanäle (6) erfolgt

## Claims (Claims for the following Contracting State(s) : AT, BE, CH, FR, GB, IT, LI, LU, NL, SE)

1. Plastic bottle crate having four side walls (4), a crate base and at least one handle (3), characterised in that at least in the handle-forming web (3) of the bottle crate there are disposed one or more hollow stiffening channels (6) which are formed by gas injection and are closed over the periphery

2. Plastic bottle crate having four side walls (4), a crate base and an integrally moulded-on centre handle which, in the region of the crate centre, extends upwards from the crate base or from compartment walls of the compartment partitioning in the form of an inverted U comprising two supporting legs (13) and a transverse web (12) which serves as carrying handle and joins the supporting legs, characterised in that the supporting legs (13) and the transverse web (12) have a closed profile (15) over their entire length transversely to the longitudinally extending centre axis of the centre handle (11) and in that at least in the transverse web (12) and the adjoining regions of the supporting legs (13) directly adjacent thereto or at least in the supporting legs (13) and in directly adjacent regions of the transverse web (12) or over the entire length of the centre handle there is disposed a hollow stiffening channel (6) which is formed by gas injection and closed over the periphery.

3. Crate according to Claim 1 or 2, characterised in that the hollow stiffening channels (6) are dosed at at least one end, preferably at both ends.

4. Crate according to one of the preceding claims, characterised in that the stiffening channels (6) extend substantially over the entire length and/or height of the side walls (4).

5. Process for producing a bottle crate according to Patent Claims 1, 3 or 4, characterised in that, in order to form the stiffening channels (6), gas is selectively injected laterally under pressure into the molten material injected into the mould for moulding the crate during the moulding of the bottle crate or in that gas is selectively injected under pressure from the crate base into the molten material injected into the mould for moulding the crate during the moulding of the bottle crate, the gas stream being guided in a U-shaped manner to form a U-shaped stiffening channel (6) In the carrying handle.

6. Process for producing a plastic bottle crate according to Patent Claims 2, 3 or 4, characterised in that, in order to mould a bottle crate having a hollow centre handle, the molten material and the gas are injected from the crate base into the mould for the supporting legs (13) of the centre handle or from the upper ends of the supporting legs (13) and/or from the transverse web (12) of the centre handle.

7. Process according to Claim 5 or 6, characterised in that the gas is injected as dose as possible to the formation of the stiffening channels (6) and selectively in the direction of the main axis of the stiffening channels (6).

## Claims (Claims for the following Contracting State(s) : DE)

1. Plastic bottle crate having four side walls (4), a crate base and at least one handle (3), characterised in that at least in the handle-forming web (3) of the bottle crate there are disposed one or more hollow stiffening channels (6) which are formed by gas injection, are closed over the periphery and are closed at at least one end, preferably at both ends.

2. Plastic bottle crate having four side walls (4), a crate base and an integrally moulded-on centre handle which, in the region of the crate centre, extends upwards from the crate base or from compartment walls of the compartment partitioning in the form of an inverted U comprising two supporting legs (13) and a transverse web (12) which serves as carrying handle and joins the supporting legs, characterised in that the supporting legs (13) and the transverse web (12) have a closed profile (15) over their entire length transversely to the longitudinally extending centre axis of the centre handle (11) and in that at least in the transverse web (12) and the adjoining regions of the supporting legs (13) directly adjacent thereto or at least in the supporting legs (13) and in directly adjacent regions of the transverse web (12) or over the entire length of the centre handle there is disposed a hollow stiffening channel (6) which is formed by gas injection and closed over the periphery.

3. Crate according to Claim 2, characterised in that the hollow stiffening channels (6) are closed at at least one end, preferably at both ends.

4. Crate according to one of the preceding claims, characterised in that the stiffening channels (6) extend substantially over the entire length and/or height of the side walls (4).

5. Process for producing a bottle crate according to Patent Claims 1, 3 or 4, characterised in that, in order to form the stiffening channels (6), gas is selectively injected laterally under pressure into the molten material injected into the mould for moulding the crate during the moulding of the bottle crate or in that gas is selectively injected under pressure from the crate base into the molten material injected into the mould for moulding the crate during the moulding of the bottle crate, the gas stream being guided in a U-shaped mannertoform a U-shaped stiffening channel (6) in the carrying handle.

6. Process for producing a plastic bottle crate according to Patent Claims 2, 3 or 4, characterised in that, in order to mould a bottle crate having a hollow centre handle, the molten material and the gas are injected from the crate base into the mould for the supporting legs (13) of the centre handle or from the upper ends of the supporting legs (13) and/or from the transverse web (12) of the centre handle.

7. Process according to Claim 5 or 6, characterised in that the gas is injected as close as possible to the formation of the stiffening channels (6) and selectively in the direction of the main axis of the stiffening channels (6)

## Revendications (Revendications pour l'(les) Etat(s) contractant(s) suivant(s) : AT, BE, CH, FR, GB, IT, LI, LU, NL, SE)

1. Casier à bouteilles en matière plastique, comprenant quatre parois latérales (4), un fond de casier et au moins une poignée (3), caractérisé en ce qu'il est réalisé, au moins dans la partie en pont (3) du casier qui constitue la poignée, un ou plusieurs conduits de renforcement (6), creux et fermés suivant leur contour, qui sont formés par injection de gaz.

2. Casier à bouteilles en matière plastique, comprenant quatre parois latérales (4), un fond de casier et une poignée centrale, venue d'une pièce au formage, qui s'étend dans la zone du centre du casier, du fond du casier ou des parois de compartiment de la division en compartiments vers le haut, sous la forme d'un U retourné constitué de deux branches d'appui (13) et d'une barre transversale (12) réunissant les branches d'appui et servant de poignée de transport caractérisé en ce que les branches d'appui (13) et la barre transversale (12) ont un profil fermé (15) sur toute leur longueur et transversalement à la ligne centrale s'étendant le long de la poignée centrale (11) et en ce qu'un conduit de renforcement (6), creux et fermé suivant son contour, qui est formé par injection de gaz, est réalisé au moins dans la barre transversale (12) et dans les zones voisines des branches d'appui (13) les prolongeant directement, ou au moins dans les branches d'appui (13) et dans les zones de la barre transversale (12) directement voisines de celles-ci ou encore sur toute la longueur de la poignée centrale.

3. Casier suivant l'une des revendications 1 et 2, caractérisé en ce que les conduits de renforcement (6) ceux sont fermés à au moins l'une de leurs extrémités, de préférence aux deux extrémités.

4. Casier suivant l'une des revendications précédentes, caractérisé en ce que des conduits de renforcement (6) s'étendent essentiellement sur toute la longueur et/ou toute la hauteur des parois latérales (4)

5. Procédé de fabrication d'un casier à bouteilles suivant l'une des revendications 1, 3 ou 4, caractérisé en ce que, pour former les conduits de renforcement (6), pendant le formage du casier à bouteilles, on introduit un gaz sous pression, dirigé latéralement, dans le bain fondu de matière injecté dans le moule de formage du casier, ou en ce que, pendant le formage du casier à bouteilles, on introduit du gaz sous pression, dirigé à partirdu fond du casier, dans le bain fondu de matière injecté dans le moule servant au formage du casier, de sorte que le flux de gaz est dévié suivant un U dans la poignée de transport en vue de former un conduit de renforcement (6) en U.

6. Procédé de fabrication d'un casier à bouteilles, en matière plastique, suivant l'une des revendications 2, 3 ou 4, caractérisé en ce que, pour former un casier à bouteilles comportant une poignée centrale de réalisation creuse, l'injection du bain fondu de matière et du gaz s'effectue à partir du fond du casier dans le moule servant pour les branches d'appui (13) de la poignée centrale, ou bien à partir des extrémités supérieures des branches d'appui (13) et/ou de la branche tranversale (12) de la poignée centrale

7. Procédé suivant l'une des revendications 5 et 6, caractérisé en ce que l'introduction de gaz s'effectue le plus près possible de la réalisation des conduits de renforcement (6) et en étant dirigée selon la direction de l'axe principal des conduits de renforcement (6).

## Revendications (Revendications pour l'(les) Etat(s) contractant(s) suivant(s) : DE)

1. Casier à bouteilles en matière plastique, comprenant quatre parois latérales (4), un fond de casier et au moins une poignée (3), caractérisé en ce qu'il est réalisé, au moins dans la partie en pont (3) du casier qui constitue la poignée, un ou plusieurs conduits de renforcement (6) creux et fermes suivant leur contour qui sont formés par injection de gaz et qui sont fermés au moins à une, de préférence aux deux extrémités.

2. Casier à bouteilles en matière plastique, comprenant quatre parois latérales (4), un fond de casier et une poignée centrale, venue d'une pièce au formage qui s'étend dans la zone du centre du casier, du fond du casier ou des parois de compartiment de la division en compartiments vers le haut, sous la forme d'un U retourné constitué de deux branches d'appui (13) et d'une barre transversale (12) réunissant les branches d'appui et servant de poignée de transport, caractérisé en ce que les branches d'appui (13) et la barre transversale (12) ont un profil fermé (15) sur toute leur longueur et transversalement à la ligne centrale s'étendant le long de la poignée centrale (11) et en ce qu'un conduit de renforcement (6) creux et fermé suivant son contour, qui est formé par injection de gaz, est réalisé au moins dans la barre transversale (12) et dans les zones voisines des branches d'appui (13) les prolongeant directement, ou au moins dans les branches d'appui (13) et dans les zones de la barre transversale (12) directement voisines de celles-ci ou encore surtoute la longueur de la poignée transversale.

3. Casier suivant la revendication 2, caractérisé en ce que les conduits de renforcement (6) creux sont fermés à au moins l'une de leurs extrémités, de préférence aux deux extrémités.

4. Casier suivant l'une des revendications précédentes, caractérisé en ce que des conduits de renforcement (6) s'étendent essentiellement sur toute la longueur et/ou toute la hauteur des parois latérales (4).

5. Procédé de fabrication d'un casier à bouteilles suivant l'une des revendications 1, 3 ou 4, caractérisé en ce que, pour former les conduits de renforcement (6) pendant le formage du casier à bouteilles, on introduit un gaz sous pression, dirigé latéralement, dans le bain fondu de matière injecté dans le moule de formage du casier, ou en ce que, pendant le formage du casier à bouteilles, on introduit du gaz sous pression, dirigé à partirdu fond du casier, dans le bain fondu de matière injecté dans le moule servant au formage du casier, de sorte que le flux de gaz est dévié suivant un U dans la poignée de transport en vue de former un conduit de renforcement (6) en U.

6. Procédé de fabrication d'un casier à bouteilles, en matière plastique, suivant l'une des revendications 2, 3 ou 4, caractérisé en ce que, pour former un casier à bouteilles comportant une poignée centrale de réalisation creuse, l'injection du bain fondu de matière et du gaz s'effectue à partir du fond du casier dans le moule servant pour les branches d'appui (13) de la poignée centrale, ou bien à partir des extrémités supérieures des branches d'appui (13) et/ou de la branche transversale (12) de la poignée centrale.

7. Procédé suivant l'une des revendications 5 et 6, caractérisé en ce que l'introduction de gaz s'effectue le plus près possible de la réalisation des conduits de renforcement (6) et en étant dirigée selon la direction de l'axe principal des conduits de renforcement (6).
